# EUROPEAN PATENT SPECIFICATION

(11) **EP 4 533 044 B1**
(45) Date of publication and mention of the grant of the patent: **04.03.2026**
(21) Application number: 22731663.5
(22) Date of filing: 03.06.2022
(51) Int. Cl.: G01G 19/08, F16F 9/53

(54) **A SHOCK ABSORBER ARRANGEMENT FOR A VEHICLE, COMPRISING A IONIC ELECTROACTIVE POLYMER SENSOR**
EINE STOSSDÄMPFERANORDNUNG FÜR EIN FAHRZEUG, MIT EINEM IONISCHEN ELEKTROAKTIVEN POLYMERSENSOR
DISPOSITIF D'AMORTISSEUR POUR VEHICULE, COMPRENANT UN CAPTEUR POLYMERE ELECTROACTIF IONIQUE

(43) Date of publication of application: 09.04.2025
(73) Proprietor: VOLVO TRUCK CORPORATION, 405 08 Göteborg (SE)
(72) Inventor: RAJAN, Anumodh, Mysore, Karnataka 570009 (IN); MEGHA, Spoorthi, Bantwal, Karnataka 574143 (IN); SHINDE, Antriksh, Ambejogai, Maharashtra 431517 (IN); KARANAM, Rajini, Bangalore, Karnataka 560028 (IN)
(74) Representative: Lavoix
(86) International application number: PCT/EP2022/065189
(87) International publication number: WO 2023/232262

(56) References cited:
- CN-B- 109 268 431
- US-A- 4 819 772

## Description

### TECHNICAL FIELD

The invention relates to a shock absorber arrangement for a vehicle. It further concerns the use of such a shock absorber arrangement in several applications: a vehicle, a system and method for determining the surface condition of a road, and a system and method for assisting road navigation.

The invention can be applied in light, medium and heavy-duty vehicles, such as trucks, buses and construction equipment.

### BACKGROUND

Vehicles, in particular industrial vehicles, are often subjected to severe mechanical constraints which may derive from various factors such as road conditions or excessive loads.

This results in extra fuel consumption and increased needs for maintenance. More serious consequences can include accidents and injuries, and damages to the vehicle or to the cargo.

Therefore, there is a need to better identify and take into account the factors that can affect the vehicle's integrity and service life in order to be able to subsequently implement appropriate solutions.

In particular, as far as road conditions are concerned, there is a need for a solution to determine the road surface quality and make this information available for any vehicle driver who may use this road.

There are no commercially available solutions for monitoring the road surface other than through cameras, radars or similar devices. However, such devices are ineffective in adverse climatic conditions with poor visibility. For example, a pothole filled with water will not be detected by most camera systems in rainy conditions. As a result, even with such known devices, the road users are not sufficiently warned of dangerous conditions. Moreover, these solutions are comparatively expensive, and therefore tough to sell to customers in developing countries.

Besides, map providers such as Google Maps do provide information regarding traffic congestion, road works and accidents that occurred on a particular route. The information provided is basically the extra time needed to cover the distance (in comparison to the normal time). A user can thus decide which road to use on the basis of this information. However, again, no information is available on the road quality.

Documents US 4819772A and CN 109268431B disclose shock absorbers for the use in vehicles.

### SUMMARY

An object of the invention is to provide devices and methods allowing to measure, evaluate and/or manage some factors which can be a risk for the vehicle and/or for people, whether they are occupants of the vehicle or present around it.

More specifically, an object of the invention is to provide a solution for determining a road surface quality and assisting road navigation which improves the known solutions.

For that purpose, and according to a first aspect, the invention concerns a shock absorber arrangement for a vehicle, especially an industrial vehicle, for connecting a vehicle frame to a wheel axle. The shock absorber arrangement comprises:
- a cylindrical sleeve having an axis;
- a base wall fixedly and sealingly mounted at one end of the sleeve;
- a rod coaxially received in the sleeve and equipped with a piston sealingly mounted on the sleeve, the piston being capable of moving axially with respect to the base wall;
wherein the sleeve, the base wall and the piston form a chamber having a variable axial length and containing a working fluid.

The shock absorber arrangement further comprises at least one ionic EAP (electroactive polymer) sensor which comprises:
- a first electrode including an electrically conductive polymer, attached to both the base wall and the piston;
- a second electrode including an electrically conductive material, attached to both the base wall and the piston; and
- an ionic medium arranged at least between said electrodes;
so that the movement of the piston causes stretching or compression of the first electrode, thereby inducing a voltage between the electrodes.

Thus, as a ionic EAP sensor produces a voltage that is correlated or even proportional to the magnitude of the mechanical constraint applied to itself, the induced voltage provides quantitative information on the mechanical load and on the piston movement.

In particular, when a vehicle equipped with such a shock absorber arrangement travels on a road, the piston moves up and down due to the road irregularities. Therefore, the induced voltage over time is a data that represents the shape of the road surface. In other words, the invention provides a reliable and simple method to read the road surface quality.

More generally, the mechanically induced charge is converted into electrical energy and this induced voltage can be used in various applications.

For example, this induced voltage can be used for measuring the vehicle load on static condition, insofar as the electrical energy is proportional to the applied mechanical constraint and as a suspension system deflects proportionally to the load on the vehicle. Actually, overloading is a common problem in mining segment and also for the fleet owners. Indeed, for legal reasons, an overloaded vehicle is required to return to the loading area, which generates delays and losses. These reasons increase the need to have a reliable on-board load monitoring solution. Besides, in some countries, there is or there will be in the near future a legal regulation requiring every vehicle to have on-board load monitoring system.

Besides, recovering the induced voltage allows implementing a EAP based energy harvesting system.

In practice, the ionic medium forms an electrolyte. The ionic medium may comprise or consist of a perfluorinated alkene with short side chains terminated by ionic groups (e.g. sulfonic or carboxylic acid groups for cation exchange, or ammonium cations for anion exchange).

The first electrode can be made of an electrically conductive polymer, and/or the second electrode can be made of an electrically conductive material. As regards the electrically conductive polymer (CP), it is an organic polymer that is electronically conductive with relatively high and reversible ion storage capacity. The mechanism of mechanical sensing is based on the insertion of ions into the polymer structure. This entails a mechanochemoelectric effect which results in ionic and electronic currents produced by mechanical deformation.

Electroactive Polymers (EAPs) are of particular interest in this application, as they have a high response speed, low density, and improved resilience. Furthermore, they are extremely lightweight, inexpensive, fracture tolerant and compliant.

According to a first embodiment, so-called "free-standing" embodiment, the ionic EAP sensor is distinct from the sleeve and housed in the chamber.

The chamber may contain the ionic medium, while the electrodes are immersed in the ionic medium.

For example, the working fluid consists of at least one ionic solution. In other words, in the shock absorber arrangement, oil can be replaced by a ionic solution. Alternatively, the working fluid comprises an oil doped with an ionic solution. In other words, a small dose of ionic solution is added to the oil, for providing the required ionic properties to the working fluid.

The first electrode may comprise a sheet of electrically conductive polymer and the second electrode may comprise a sheet of electrically conductive material. This electrically conductive material can be a metallic material.

The sheets may be substantially cylindrical and coaxial with the sleeve. Preferably, the sheet of electrically conductive polymer is located closer to the axis.

According to a second embodiment, so-called "tri-layer" embodiment, the ionic EAP sensor forms the sleeve and is attached to both the base wall and the piston.

The ionic EAP sensor may comprise a separator layer of an electrically insulating and ionically conducting material, which forms the ionic medium, and which is sandwiched between two layers of an electrically conductive polymer which form the first and second electrodes.

The separator layer works as an ion reservoir and also as an electrical insulator. Trilayer sensors with an electrolyte within a separator layer can function in air and do not need an external electrolyte. The separator layer forms an electrolyte supporting layer or film. Upon actuation, ions move from one electrode to the other via the electrolyte supporting layer.

In an embodiment, the shock absorber arrangement further comprises a spring housed in the sleeve, arranged coaxially and around the rod and abutting against the base wall and the piston.

The shock absorber arrangement may further comprise an electronic circuit connected to the electrodes, for providing an electric signal representative of the position and/or of the movement of the piston relative to the base wall.

The electric signal can consist of one data at a given moment or of a set of data corresponding to the evolution of the voltage induced between the electrodes over time.

On the one hand, the piston position corresponds to a static measurement when the vehicle is stopped. A comparison with the signal provided when the vehicle is not loaded allows determining the current vehicle load. On the other hand, the piston movement induces voltage that can be used for determining the surface condition of a road, and/or for powering accessories, in an energy harvesting system.

According to a second aspect, the invention relates to a system for determining the surface condition of a road, comprising:
- a shock absorber arrangement as previously described, wherein the electronic circuit is configured to collect the induced voltage data over time as an input signal and to process the input signal to obtain a processed signal representing a wheel axle vibration pattern;
- a computer, such as a vehicle onboard computer, configured to analyze the processed signal to provide a set of road surface condition indexes of successive road stretches, wherein an index corresponds to a local road surface condition data.

These road surface condition data can be collected, possibly coupled to the data provided by a mapping system and made available to the vehicle's driver as well to all authorized users. Giving information on the road surface quality to the average user(s) allows significantly reducing the problems caused by bad roads.

According to a third aspect, the invention relates to a vehicle, especially an industrial vehicle, comprising a frame and at least one wheel axle. The vehicle further comprises at least one shock absorber arrangement as previously described, for connecting the frame to the wheel axle, or a system for determining the surface condition of a road as previously described.

According to a fourth aspect, the invention relates to a system for assisting road navigation, for at least one such vehicle. The system for assisting road navigation comprises a system for determining the surface condition of a road as previously described, and further includes a display unit and a navigation program connected to a mapping system. The computer is further configured to:
- combine the processed signal with the mapping system data, so that each index is assigned a location;
- assign a specific graphic depiction to each specific index, such as a specific color;
- and superimpose the graphic depictions corresponding to the successive road stretches on the map displayed on the display unit by the navigation program.

This can be achieved by means of a machine learning or deep learning software algorithm run on the computer.

The system for assisting road navigation may further comprise:
- a distant server wirelessly accessible by connected and authorized users, capable of storing the indexes and their respective locations;
- communication means between the computer and the distant server.

Therefore, the invention allows spreading the road surface quality information to any authorized user, who can thus choose a route having a better quality. The resulting advantages include:
- less fuel consumption;
- fewer delays;
- less or no damages to the cargo;
- reduction in damages to the vehicle, which in turn reduces the maintenance and repair costs and the corresponding vehicle downtime;
- less driver fatigue, which reduces the risks of accident;
- reduction in the insurance expenditure and warranty costs, which can be particularly high in developing and underdeveloped countries where road infrastructure is poor

Such a system is thus of value, in particular to the average freight operator.

The system according to the invention can also be provided as an aftermarket solution. Indeed, it does not require major modifications, as the shock absorber arranger can be mounted on any vehicle irrespective of the manufacturer. This could be a service available to everyone irrespective of the vehicle brand they own. The invention could also be used in the field of autonomous vehicles. The connection to a mapping system further allows increasing the cross-functional activities.

According to a fifth aspect, the invention relates to a method for determining the surface condition of a road with a vehicle as previously described running on said road. The method comprises:
- collecting the induced voltage data over time as an input signal;
- processing the input signal to obtain a processed signal representing a wheel axle vibration pattern;
- analyzing the processed signal to provide a set of road surface condition indexes of successive road stretches, wherein an index corresponding to a local road surface condition data.

Analyzing the processed signal may comprise feeding a machine learning algorithm or a deep learning algorithm with the processed signal, said algorithm being configured to identify a local road surface condition data and to assign a road surface condition index to said local road surface condition data, on the basis of a pre-established road surface condition classification.

According to a sixth aspect, the invention relates to a method for assisting road navigation, the method comprising:
- determining the surface condition of at least one road with the method as previously described;
- combining the processed signal with the data of a mapping system so that each index is assigned a location;
- assigning a specific graphic depiction to each specific index, such as a specific color;
- superimposing the graphic depictions corresponding to the successive road stretches on the map displayed by a navigation program.

Determining the surface condition of one road allows providing the driver with information on how to adapt driving to upcoming road irregularities. Determining the surface condition of a plurality of roads makes it possible for a driver to choose the most appropriate road depending on his needs, such as the quickest way or the best road surface condition.

The method for assisting road navigation may comprise storing the indexes and their respective locations on a distant server wirelessly accessible by connected and authorized users, such as a cloud.

The method may also comprise carrying out the method for determining the surface condition of a road as previously described, for all connected and authorized users. Moreover, if a more recent index is determined to be different from a previously stored corresponding index by a predetermined value, then said previously stored index is replaced by the more recent index. Such a method allows providing regularly updated information to the users.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a schematic side view of a vehicle comprising a shock absorber arrangement according to an embodiment of the invention;
Fig. 2 is a partly cut-away perspective view of a shock absorber arrangement according to a first embodiment of the invention;
Fig. 3 is a partly cut-away perspective view of a shock absorber arrangement according to a second embodiment of the invention;
Fig. 4 is a flowchart corresponding to a method for assisting road navigation according to an embodiment of the invention;
Fig. 5 is a schematic representation of a system for assisting road navigation according to an embodiment of the invention.

### DETAILED DESCRIPTION OF EXAMPLE EMBODIMENTS OF THE INVENTION

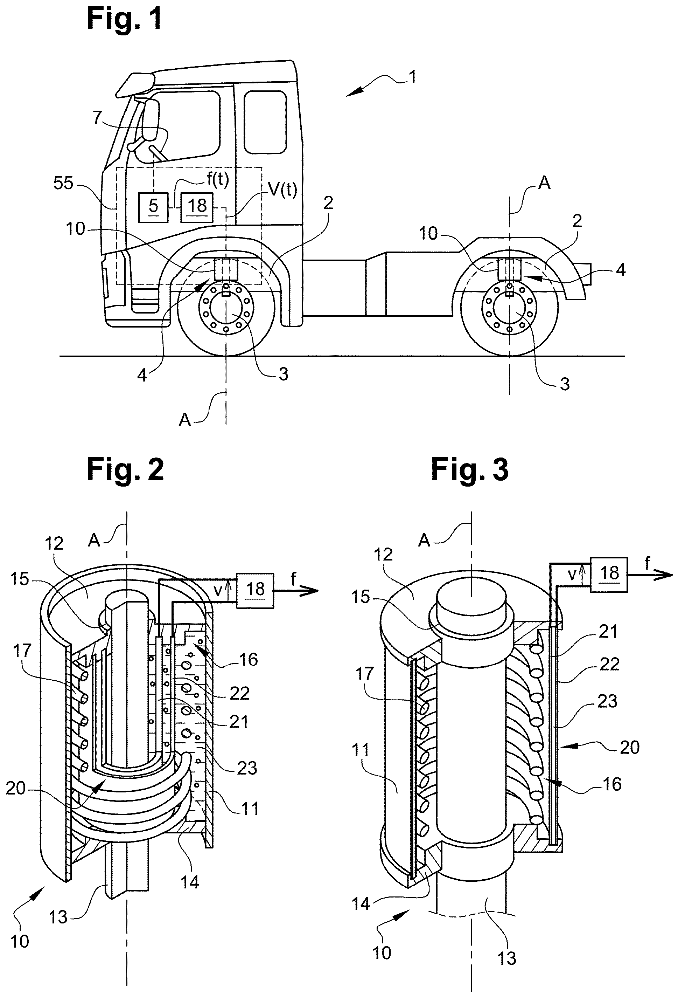

Figure 1 shows a vehicle 1 which comprises a frame 2, as well as at least one wheel axle 3, here for example a front wheel axle and a rear wheel axle. The vehicle illustrated is a truck, but the invention can also apply to other vehicles, in particular industrial vehicles, such as buses or construction equipment.

The vehicle 1 comprises a suspension arrangement 4 that connects the frame 2 to the corresponding wheel axle 3. Hence, each of the suspension arrangement 4 is arranged to damp/absorb loads from the respective wheel axles during motion of the vehicle 1. The suspension arrangement 4 comprises a shock absorber arrangement 10, which therefore connects the frame 2 to the wheel axle 3.

The vehicle 1 further comprises a vehicle onboard computer 5 capable of receiving and processing data, and controlling various devices, among other functionalities.

Two embodiments of a shock absorber arrangement 10 are shown in figures 2 and 3.

The shock absorber arrangement 10 comprises a cylindrical sleeve 11 having an axis A which, in the mounted position on the vehicle 1, is substantially vertical. It also comprises a base wall 12 which is fixedly and sealingly mounted at one end of the sleeve 11, for example at the upper end of the sleeve 11. The shock absorber arrangement 10 further comprises a rod 13 that is coaxially received in the sleeve 11 and that is equipped with a piston 14 sealingly mounted on the sleeve 11. The piston 14 is capable of moving axially with respect to the base wall 12. In practice, the piston 14 can be secured to the rod 13, and the rod 13 can slide along axis A while being sealingly engaged in a hole 15 of the base wall 12. Thus, the sleeve 11, the base wall 12 and the piston 14 form a chamber 16 having a variable axial length. In use, this chamber 16 contains a working fluid.

The shock absorber arrangement 10 can also comprise a spring 17 housed in the sleeve 11, arranged coaxially and around the rod 13 and abutting against the base wall 12 and the piston 14. The spring 17 tends to move the base wall 12 and the piston 14 away from each other after it has been compressed, so that the shock absorber arrangement 10 can return towards a rest position.

The shock absorber arrangement 10 further comprises at least one ionic EAP (electroactive polymer) sensor 20. The or each ionic EAP sensor 20 comprises:
- a first electrode 21 including an electrically conductive polymer, attached to both the base wall 12 and the piston 14;
- a second electrode 22 including an electrically conductive material, attached to both the base wall 12 and the piston 14;
- and an ionic medium 23 arranged at least between said electrodes 21, 22.

Thus, the movement of the piston 14 causes stretching or compression of the first electrode 21. As the first electrode 21 includes an electrically conductive polymer, and because of the above-described arrangement, this induces a voltage V between the electrodes 21, 22.

The shock absorber arrangement 10 further comprises an electronic circuit 18 which is connected to the electrodes 21, 22, and which provides an electric signal representative of the position and/or of the movement of the piston relative to the base wall. In an embodiment, the electronic circuit 18 may include a high pass filter, a low pass filter, and/or any electronic component which allows appropriately collecting the induced voltage data over time as an input signal V(t) and processing the input signal V(t) to obtain a processed signal f(t). This processed signal f(t) represents a wheel axle vibration pattern.

Figure 2 shows a first embodiment of a shock absorber arrangement 10.

In this embodiment, the ionic EAP sensor 20 is housed in the chamber 16. More specifically, the chamber 16 contains the ionic medium 23 and the electrodes 21, 22 are immersed in the ionic medium 23. Thus, the ionic EAP sensor 20 is distinct from the sleeve 11.

Several technical solutions are possible as regards the ionic medium 23. In a first embodiment, the working fluid of the shock absorber arrangement 10 consists of at least one ionic solution. Alternatively, the working fluid may comprise an oil doped with an ionic solution.

The first electrode 21 can comprise or consist of a sheet of electrically conductive polymer, such as polypyrrole (PPy) and poly(3,4-ethylenedioxythiophene) (also known as PEDOT). The second electrode 22 can comprise or consist of a sheet of electrically conductive material such as a metallic material. It may for example include gold, platinum or steel.

The first and second electrodes 21, 22 may be in the form of substantially cylindrical sheets having the same axis A, radially spaced apart from each other, with the sheet of electrically conductive polymer being preferably located closer to the axis A.

In a second embodiment, shown in figure 3, the ionic EAP sensor 20 forms the sleeve 11 and is attached to both the base wall 12 and the piston 14. More specifically, the ionic EAP sensor 20 may comprise a separator layer of an electrically insulating and ionically conducting material, which forms the ionic medium 23, and which is sandwiched between two layers of an electrically conductive polymer which form the first and second electrodes 21, 22.

For example, the first and second electrodes 21, 22 can include or be made of PEDOT.

As regards the separator layer, it can include or be made of PVDF (polyvinylidenedifluoride) or similar materials. It may have a PEDOT/IPN/PEDOT structure, in which PEDOT is polymerized inside a IPN (interpenetrating polymer network ) film by chemical deposition. One example of IPN is a ionically conductive poly(ethylene oxide) (PEO) interpenetrated with an elastomer, such as a nitrile butadiene rubber.

In addition, a film of gold or platinum may be arranged between the electrically conductive polymers (first and second electrodes 21, 22) and the separator layer 23. For example, gold can be sputtered on a PVDF membrane and then an electrically conductive polymer is deposited by electrochemical deposition.

In such embodiments based on electrically conductive polymers (CPs) deposited on PVDF or PEDOT/IPN/PEDOT, the so obtained trilayer structure can be swollen with ionic liquids or other salts dissolved in different electrolytes to function in air as a ionic EAP sensor.

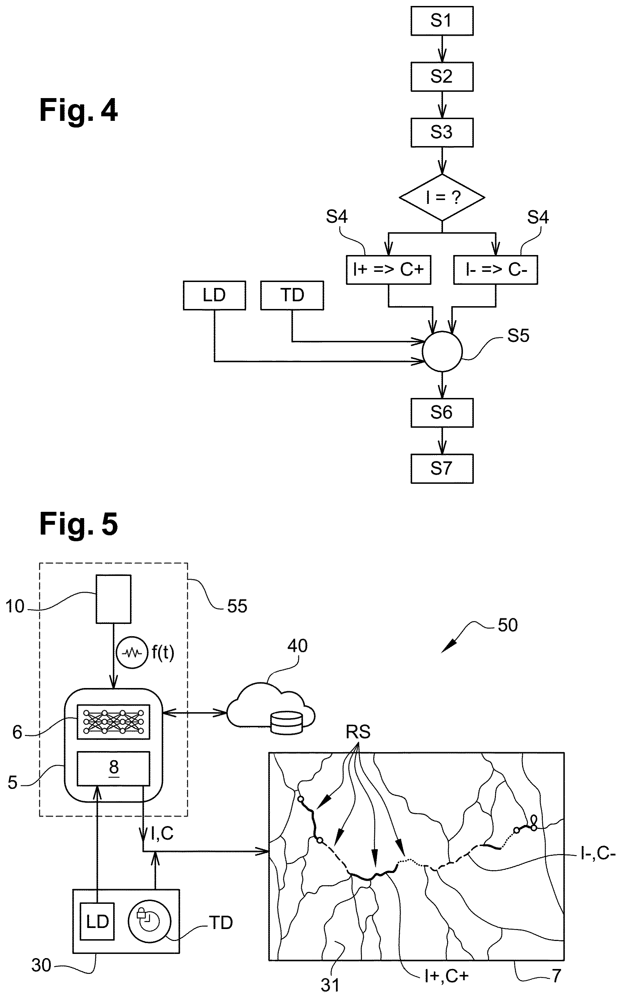

A shock absorber arrangement according to the invention allows providing a system and method for determining the surface condition of a road, and a system and method for assisting road navigation, which will now be described with reference to figures 4 and 5.

In a first step S1, the method for determining the surface condition of a road comprises collecting the induced voltage data over time as an input signal V(t), by means of the shock absorber arrangement 10.

When the vehicle 1 runs on a rough road, there is a change (namely an increase and/or a decrease) in the suspension travel with respect to a normal road, i.e. a road with an acceptable surface condition. This generates a higher voltage in absolute value, while the sign of the voltage indicates if the road surface forms a recess or a bump. Thus, the input signal V(t) represents the shape of the road surface.

Then, in a step S2, the input signal V(t) is processed by the electronic circuit 18, so as to obtain a processed signal f(t) which represents a wheel axle vibration pattern corresponding to the shape of the road surface. Processing the input signal may include: taking into account a predetermined basic pattern of suspension rod travel in normal (acceptable) road surface condition; identifying spikes in the input signal, these spikes indicating fairly significant irregularities; filtering out the input signal with predetermined threshold values to remove noise.

Some features of the processed signal f(t) are more specifically representative of the road surface condition. For example, the amplitude of a spike in the processed signal f(t) indicates the depth of a porthole or the height of a bump, while the frequency of a spike represents the duration of such a road irregularity. A combination of the amplitude and frequency of the processed signal f(t) can provide a fairly good representation of the shape of the road surface and useful information for the vehicle driver. For example, an isolated spike may not necessarily mean a bad road, but allows alerting the driver of an upcoming pothole to watch out.

In a step S3, the processed signal f(t) is subsequently analyzed, typically by the vehicle onboard computer 5. Such an analysis may comprise feeding an algorithm 6, which can be a machine learning algorithm or a deep learning algorithm, with the processed signal f(t). Following this analysis, there is provided a set of road surface condition indexes I of successive road stretches RS, wherein an index I corresponds to a local road surface condition data.

In other words, the algorithm 6 allows achieving a classification. In practice, the algorithm 6 is configured to identify a local road surface condition data and to assign a road surface condition index I to said local road surface condition data, on the basis of a pre-established road surface condition classification.

Depending on whether a given road surface condition index I is classified as "good" (I+) or "bad" (I-), step S4 of the method comprises assigning a specific graphic depiction to each specific index, such as a specific color
Then, in a step S4, the method comprises assigning a specific graphic depiction to each specific index I, such as a specific color C. For example, color "green" (C+) can be assigned to a road surface condition index I classified as "good" (I+), while color "red" (C-) can be assigned to a road surface condition index I classified as "bad" (I-). Although the flowchart of figure 4 shows a classification of a road surface condition index I in either one of two categories, the method may provide a more detailed classification, with more than two categories, and the corresponding number of different colors;
The method further comprises combining the processed signal f(t) with the data of a mapping system 30. More specifically, in a step S5, a location data LD from the mapping system 30 can be combined with the previously determined road surface condition indexes I, so that each index I is assigned a location. Preferably, in addition, step S5 also includes combining a time data TD from the mapping system 30 to the previously determined road surface condition indexes I, so that each index I is further assigned a time.

In step S6, the indexes I and their respective locations can be stored on a distant server 40 which is wirelessly accessible by connected and authorized users, such as a cloud.

The method for assisting road navigation also comprises a step S7 in which the information is displayed. In practice, the graphic depictions (i.e. the colors C in the above-described exemplary embodiment) corresponding to the successive road stretches RS can be superimposed on the map 31 displayed by a navigation program, and displayed on a display unit 7 provided in the vehicle 1 for the driver.

If the information is stored on a distant server 40, it can be accessed not only by the driver of the vehicle 1 equipped with the shock absorber arrangement 10 and system for assisting road navigation according to the invention, but also to all authorized users.

The method for determining the surface condition of a road can be carried out for all connected and authorized users. Therefore, if a more recent index I is determined to be different from a previously stored corresponding index by a predetermined value, then said previously stored index can be replaced by the more recent index.

As shown in figure 5, the system 50 for assisting road navigation comprises:
- a system 55 for determining the surface condition of a road, this system 55 including a shock absorber arrangement 10 and the vehicle onboard computer 5 (or another computer);
- a display unit 7 connected to the vehicle onboard computer 5;
- a navigation program 8 which is connected to a mapping system 30, and which can be run on the vehicle onboard computer 5.

Preferably, the system 50 for assisting road navigation further comprises the distant server 40, and communication means between the vehicle onboard computer 5 and the distant server 40.

As can be seen, the display 7 shows a map as well as the graphic depictions C corresponding to the road surface condition indexes I of the successive road stretches RS, along the entire route.

Any authorized user can connect to the distant server 40 and set his destination location. The stored data about the route can be fetched from the distant server 40. This enables the user to visualize two or more routes with the estimated travel time and road surface quality, for example, so that the user can decide the road to choose depending on his convenience.

The user can also see rough road stretches RS on the route, owing to the dedicated graphic depiction C, such as the red color.

The data for a particular route can be saved till another vehicle equipped with the system 50 for assisting road navigation takes the route and rewrites the data with a significant variation. A user can use the data offline (corresponding to old data) and once connected online, the data will get refreshed and new data will be available.

## Claims

1. A shock absorber arrangement (10) for a vehicle (1), especially an industrial vehicle, for connecting a vehicle frame (2) to a wheel axle (3), the shock absorber arrangement (10) comprising:
- a cylindrical sleeve (11) having an axis (A);
- a base wall (12) fixedly and sealingly mounted at one end of the sleeve (11);
- a rod (13) coaxially received in the sleeve (11) and equipped with a piston (14) sealingly mounted on the sleeve (11), the piston (14) being capable of moving axially with respect to the base wall (12);
wherein the sleeve (11), the base wall (12) and the piston (14) form a chamber (16) having a variable axial length and containing a working fluid;
**characterized in that** the shock absorber arrangement (10) further comprises at least one ionic EAP (electroactive polymer) sensor (20) which comprises:
- a first electrode (21) including an electrically conductive polymer, attached to both the base wall (12) and the piston (14);
- a second electrode (22) including an electrically conductive material, attached to both the base wall (12) and the piston (14); and
- an ionic medium (23) arranged at least between said electrodes (21, 22);
so that the movement of the piston (14) causes stretching or compression of the first electrode (21), thereby inducing a voltage (V) between the electrodes (21, 22).

2. The shock absorber arrangement according to claim 1, **characterized in that** the ionic EAP sensor (20) is distinct from the sleeve (11) and housed in the chamber (16).

3. The shock absorber arrangement according to claim 2, **characterized in that** the chamber (16) contains the ionic medium (23), the electrodes (21, 22) being immersed in the ionic medium (23).

4. The shock absorber arrangement according to claim 3, **characterized in that** the working fluid consists of at least one ionic solution.

5. The shock absorber arrangement according to claim 3, **characterized in that** the working fluid comprises an oil doped with an ionic solution.

6. The shock absorber arrangement according to any one of claims 2 to 5, **characterized in that** the first electrode (21) comprises a sheet of electrically conductive polymer and the second electrode (22) comprises a sheet of electrically conductive material including a metallic material.

7. The shock absorber arrangement according to claim 6, **characterized in that** the sheets are substantially cylindrical and coaxial with the sleeve (11) and wherein, preferably, the sheet of electrically conductive polymer is located closer to the axis (A).

8. The shock absorber arrangement according to claim 1, **characterized in that** the ionic EAP sensor (20) forms the sleeve (11) and is attached to both the base wall (12) and the piston (14).

9. The shock absorber arrangement according to claim 8, **characterized in that** the ionic EAP sensor (20) comprises a separator layer (23) of an electrically insulating and ionically conducting material, which forms the ionic medium, and which is sandwiched between two layers of an electrically conductive polymer which form the first and second electrodes (21, 22).

10. The shock absorber arrangement according to any one of claims 1 to 9, **characterized in that** it further comprises a spring (17) housed in the sleeve (11), arranged coaxially and around the rod (13) and abutting against the base wall (12) and the piston (14).

11. The shock absorber arrangement according to any one of claims 1 to 10, **characterized in that** it further comprises an electronic circuit (18) connected to the electrodes (21, 22), for providing an electric signal representative of the position and/or of the movement of the piston (14) relative to the base wall (12).

12. A system (55) for determining the surface condition of a road, comprising:
- a shock absorber arrangement (10) according to claim 11, wherein the electronic circuit (18) is configured to collect the induced voltage data over time as an input signal (V(t)) and to process the input signal (V(t)) to obtain a processed signal (f(t)) representing a wheel axle vibration pattern;
- a computer (5), such as a vehicle onboard computer, configured to analyze the processed signal (f(t)) to provide a set of road surface condition indexes (I) of successive road stretches (RS), wherein an index (I) corresponds to a local road surface condition data.

13. A vehicle (1), especially an industrial vehicle, comprising a frame (2) and at least one wheel axle (3), the vehicle (1) further comprising at least one shock absorber arrangement (10) according to any one of claims 1 to 11 for connecting the frame (2) to the wheel axle (3), or comprising a system (55) for determining the surface condition of a road according to claim 12.

14. A system (50) for assisting road navigation, for at least one vehicle (1) according to claim 13, the system for assisting road navigation comprising a system (55) for determining the surface condition of a road according to claim 12, and further including a display unit (7) and a navigation program (8) connected to a mapping system (30), wherein the computer (5) is further configured to:
- combine the processed signal (f(t)) with the mapping system data (LD, TD), so that each index (I) is assigned a location;
- assign a specific graphic depiction (C) to each specific index (I), such as a specific color;
- and superimpose the graphic depictions (C) corresponding to the successive road stretches (RS) on the map (31) displayed on the display unit (7) by the navigation program (8).

15. The system for assisting road navigation according to claim 14, further comprising:
- a distant server (40) wirelessly accessible by connected and authorized users, capable of storing the indexes (I) and their respective locations;
- communication means between the computer (5) and the distant server (40).

16. A method for determining the surface condition of a road with a vehicle (1) according to claim 13 running on said road, the method comprising:
- collecting the induced voltage data over time as an input signal (V(t));
- processing the input signal (V(t)) to obtain a processed signal (f(t)) representing a wheel axle vibration pattern;
- analyzing the processed signal (f(t)) to provide a set of road surface condition indexes (I) of successive road stretches (RS), wherein an index (I) corresponds to a local road surface condition data.

17. The method for determining the surface condition of a road according to claim 16, **characterized in that** analyzing the processed signal (f(t)) comprises feeding a machine learning algorithm (6) or a deep learning algorithm (6) with the processed signal (f(t)), said algorithm (6) being configured to identify a local road surface condition data and to assign a road surface condition index (I) to said local road surface condition data, on the basis of a pre-established road surface condition classification.

18. A method for assisting road navigation, the method comprising:
- determining the surface condition of at least one road with the method according to claim 16 or claim 17;
- combining the processed signal (f(t)) with the data (LD, TD) of a mapping system (30) so that each index (I) is assigned a location;
- assigning a specific graphic depiction (C) to each specific index (I), such as a specific color;
- superimposing the graphic depictions (C) corresponding to the successive road stretches (RS) on the map (31) displayed by a navigation program (8).

19. The method for assisting road navigation according to claim 18, **characterized in that** it further comprising storing the indexes (I) and their respective locations on a distant server (40) wirelessly accessible by connected and authorized users.

20. The method for assisting road navigation according to claim 19, **characterized in that** it comprises carrying out the method for determining the surface condition of a road according to claim 16 or claim 17 for all connected and authorized users, and **in that**, if a more recent index (I) is determined to be different from a previously stored corresponding index (I) by a predetermined value, then said previously stored index is replaced by the more recent index.

## Patentansprüche

1. Stoßdämpferanordnung (10) für ein Fahrzeug (1), insbesondere ein Industriefahrzeug, zur Verbindung eines Fahrzeugrahmens (2) mit einer Radachse (3), die Stoßdämpferanordnung (10) umfassend:
- eine zylindrische Hülse (11), die eine Achse (A) aufweist;
- eine Bodenwand (12), die fest und dicht an einem Ende der Hülse (11) montiert ist;
- eine Stange (13), die koaxial in der Hülse (11) aufgenommen ist und mit einem Kolben (14) ausgestattet ist, der dicht auf der Hülse (11) montiert ist, wobei der Kolben (14) in der Lage ist, sich axial in Bezug auf die Bodenwand (12) zu bewegen;
wobei die Hülse (11), die Bodenwand (12) und der Kolben (14) eine Kammer (16) bilden, die eine variable axiale Länge aufweist und ein Betriebsfluid enthält;
**dadurch gekennzeichnet, dass** die Stoßdämpferanordnung (10) ferner mindestens einen Sensor aus ionischem EAP (elektroaktivem Polymer) (20) umfasst, der Folgendes umfasst:
- eine erste Elektrode (21), die ein elektrisch leitendes Polymer beinhaltet und sowohl an der Bodenwand (12) als auch an dem Kolben (14) angebracht ist;
- eine zweite Elektrode (22), die ein elektrisch leitendes Material beinhaltet und sowohl an der Bodenwand (12) als auch am Kolben (14) angebracht ist; und
- ein ionisches Medium (23), das mindestens zwischen den Elektroden (21,22) angeordnet ist;
sodass eine Bewegung des Kolbens (14) eine Dehnung oder Stauchung der ersten Elektrode (21) bewirkt, wodurch eine Spannung (V) zwischen den Elektroden (21, 22) induziert wird.

2. Stoßdämpferanordnung nach Anspruch 1, **dadurch gekennzeichnet, dass** der ionische EAP-Sensor (20) sich von der Hülse (11) unterscheidet und in der Kammer (16) untergebracht ist.

3. Stoßdämpferanordnung nach Anspruch 2, **dadurch gekennzeichnet, dass** die Kammer (16) das ionische Medium (23) enthält, wobei die Elektroden (21, 22) in das ionische Medium (23) eingetaucht sind.

4. Stoßdämpferanordnung nach Anspruch 3, **dadurch gekennzeichnet, dass** das Betriebsfluid aus mindestens einer ionischen Lösung besteht.

5. Stoßdämpferanordnung nach Anspruch 3, **dadurch gekennzeichnet, dass** das Betriebsfluid ein Öl umfasst, das mit einer ionischen Lösung dotiert ist.

6. Stoßdämpferanordnung nach einem der Ansprüche 2 bis 5, **dadurch gekennzeichnet, dass** die erste Elektrode (21) eine Folie aus elektrisch leitendem Polymer umfasst und die zweite Elektrode (22) eine Folie aus elektrisch leitendem Material einschließlich eines metallischen Materials umfasst.

7. Stoßdämpferanordnung nach Anspruch 6, **dadurch gekennzeichnet, dass** die Folien im Wesentlichen zylindrisch und koaxial mit der Hülse (11) sind und vorzugsweise wobei die Folie aus elektrisch leitendem Polymer näher an der Achse (A) angeordnet ist.

8. Stoßdämpferanordnung nach Anspruch 1, **dadurch gekennzeichnet, dass** der ionische EAP-Sensor (20) die Hülse (11) bildet und sowohl an der Bodenwand (12) als auch an dem Kolben (14) angebracht ist.

9. Stoßdämpferanordnung nach Anspruch 8, **dadurch gekennzeichnet, dass** der ionische EAP-Sensor (20) eine Trennschicht (23) aus einem elektrisch isolierenden und ionisch leitenden Material umfasst, die das ionische Medium bildet und die zwischen zwei Schichten eines elektrisch leitenden Polymers angeordnet ist, die die erste und zweite Elektroden (21, 22) bilden.

10. Stoßdämpferanordnung nach einem der Ansprüche 1 bis 9, **dadurch gekennzeichnet, dass** sie ferner eine in der Hülse (11) untergebrachte Feder (17) umfasst, die koaxial und um die Stange (13) angeordnet ist und an der Bodenwand (12) und dem Kolben (14) anliegt.

11. Stoßdämpferanordnung nach einem der Ansprüche 1 bis 10, **dadurch gekennzeichnet, dass** sie ferner eine elektronische Schaltung (18) umfasst, die mit den Elektroden (21, 22) verbunden ist, um ein elektrisches Signal bereitzustellen, das repräsentativ für die Position und/oder die Bewegung des Kolbens (14) in Bezug auf die Basiswand (12) ist.

12. System (55) zum Bestimmen des Oberflächenzustands einer Straße, umfassend:
- Stoßdämpferanordnung (10) nach Anspruch 11, wobei die elektronische Schaltung (18) konfiguriert ist, um die Daten der induzierten Spannung über die Zeit als ein Eingangssignal (V(t)) zu erfassen und das Eingangssignal (V(t)) zu verarbeiten, um ein verarbeitetes Signal (f(t)) zu erlangen, das ein Radachsenschwingungsmuster darstellt;
- einen Computer (5), beispielsweise einen Fahrzeug-Bordcomputer, der konfiguriert ist, um das verarbeitete Signal (f(t)) zu analysieren, um eine Reihe von Fahrbahnzustandsindizes (I) für aufeinanderfolgende Straßenabschnitte (RS) bereitzustellen, wobei ein Index (I) einem lokalen Datenwert zu dem Fahrbahnzustand entspricht.

13. Fahrzeug (1), insbesondere Nutzfahrzeug, umfassend einen Rahmen (2) und mindestens einer Radachse (3), das Fahrzeug (1) ferner umfassend mindestens eine Stoßdämpferanordnung (10) nach einem der Ansprüche 1 bis 11 zur Verbindung des Rahmens (2) mit der Radachse (3), oder umfassend ein System (55) zum Bestimmen des Oberflächenzustands einer Straße nach Anspruch 12.

14. System (50) zum Unterstützen von Straßennavigation für mindestens ein Fahrzeug (1) nach Anspruch 13, wobei das System Unterstützen von Straßennavigation ein System (55) zum Bestimmen des Oberflächenzustands einer Straße nach Anspruch 12 umfasst und ferner eine Anzeigeeinheit (7) und ein mit einem Kartierungssystem (30) verbundenes Navigationsprogramm (8) beinhaltet, wobei der Computer (5) ferner zu Folgendem konfiguriert ist:
- Kombinieren des verarbeiteten Signals (f(t)) mit den Daten des Kartierungssystems (LD, TD), sodass jedem Index (I) ein Ort zugeordnet wird;
- Zuordnen jedem spezifischen Index (I) eine spezifische grafische Darstellung (C), z. B. eine spezifische Farbe;
- und Überlagern der grafischen Darstellungen (C), die den aufeinanderfolgenden Straßenabschnitten (RS) entsprechen, auf der Karte (31), die von dem Navigationsprogramm (8) auf der Anzeigeeinheit (7) angezeigt wird.

15. System zum Unterstützen von Straßennavigation nach Anspruch 14, ferner umfassend:
- einen entfernten Server (40), der von verbundenen und autorisierten Benutzer zugreifbar ist und der in der Lage ist, die Indizes (I) und ihre jeweiligen Standorte zu speichern;
- Kommunikationseinrichtungen zwischen dem Computer (5) und dem entfernten Server (40).

16. Verfahren zum Bestimmen des Oberflächenzustands einer Straße, auf der ein Fahrzeug (1) nach Anspruch 13 fährt, das Verfahren umfassend:
- Erfassen der induzierten Spannungsdaten über die Zeit als Eingangssignal (V(t));
- Verarbeiten des Eingangssignals (V(t)), um ein verarbeitetes Signal (f(t)) zu erlangen, das ein Radachsenschwingungsmuster darstellt;
- Analysieren des verarbeiteten Signals (f(t)), um eine Reihe von Indizes für den Zustand der Fahrbahnoberfläche (I) für aufeinanderfolgende Straßenabschnitte (RS) bereitzustellen, wobei ein Index (I) lokalen Daten für den Zustand der Fahrbahnoberfläche entspricht.

17. Verfahren zum Bestimmen des Oberflächenzustands einer Straße nach Anspruch 16, **dadurch gekennzeichnet, dass** ein Analysieren des verarbeiteten Signals (f(t)) ein Einspeisen des verarbeiteten Signals (f(t)) in einen Algorithmus (6) für maschinelles Lernen oder einen Algorithmus (6) für tiefes Lernen umfasst, wobei der Algorithmus (6) konfiguriert ist, um lokale Straßenoberflächenzustandsdaten zu identifizieren und den lokalen Straßenoberflächenzustandsdaten einen Straßenoberflächenzustandsindex (I) basierend auf einer zuvor festgelegten Straßenoberflächenzustandsklassifizierung zuzuordnen.

18. Verfahren zum Unterstützen von Straßennavigation, umfassend:
- Bestimmen des Oberflächenzustands mindestens einer Straße mit dem Verfahren nach Anspruch 16 oder Anspruch 17;
- Kombinieren des verarbeiteten Signals (f(t)) mit den Daten (LD, TD) eines Mapping-Systems (30), sodass jedem Index (I) ein Ort zugeordnet wird;
- Zuordnen einer bestimmten grafischen Darstellung (C) zu jedem bestimmten Index (I), z. B. einer bestimmten Farbe;
- Überlagern der grafischen Darstellungen (C), die den aufeinanderfolgenden Straßenabschnitten (RS) entsprechen, auf der von einem Navigationsprogramm (8) angezeigten Karte (31).

19. Verfahren zum Unterstützen der Straßennavigation nach Anspruch 18, **dadurch gekennzeichnet, dass** es ferner das Speichern der Indizes (I) und ihrer jeweiligen Standorte auf einem entfernten Server (40) umfasst, der für verbundene und autorisierte Benutzer drahtlos zugänglich ist.

20. Verfahren zum Unterstützen von Straßennavigation nach Anspruch 19, **dadurch gekennzeichnet, dass** es darin besteht, das Verfahren zur Bestimmung des Oberflächenzustands einer Straße nach Anspruch 16 oder Anspruch 17 für alle angeschlossenen und autorisierten Benutzer durchzuführen, und dass, wenn bestimmt wird, dass ein neuerer Index (I) sich von einem zuvor gespeicherten entsprechenden Index (I) um einen vorbestimmten Wert unterscheidet, der zuvor gespeicherte Index durch den neueren Index ersetzt wird.

## Revendications

1. Agencement d'amortisseur (10) pour un véhicule (1), en particulier un véhicule industriel, pour relier un châssis de véhicule (2) à un essieu de roue (3), l'agencement d'amortisseur (10) comprenant :
- un manchon cylindrique (11) ayant un axe (A) ;
- une paroi de base (12) montée de manière fixe et étanche à une extrémité du manchon (11) ;
- une tige (13) reçue coaxialement dans le manchon (11) et équipée d'un piston (14) monté de manière étanche sur le manchon (11), le piston (14) étant capable de se déplacer axialement par rapport à la paroi de base (12) ;
dans lequel le manchon (11), la paroi de base (12) et le piston (14) forment une chambre (16) ayant une longueur axiale variable et contenant un fluide de travail ;
**caractérisé en ce que** l'agencement d'amortisseur (10) comprend en outre au moins un capteur ionique à PEA (polymère électroactif) (20) qui comprend :
- une première électrode (21) comprenant un polymère conducteur d'électricité, fixée à la fois à la paroi de base (12) et au piston (14) ;
- une seconde électrode (22) comprenant un matériau conducteur d'électricité, fixée à la fois à la paroi de base (12) et au piston (14) ; et
- un milieu ionique (23) agencé au moins entre lesdites électrodes (21, 22) ;
de sorte que le mouvement du piston (14) provoque l'étirement ou la compression de la première électrode (21), induisant ainsi une tension (V) entre les électrodes (21, 22).

2. Agencement d'amortisseur selon la revendication 1, **caractérisé en ce que** le capteur ionique à PEA (20) est distinct du manchon (11) et logé dans la chambre (16).

3. Agencement d'amortisseur selon la revendication 2, **caractérisé en ce que** la chambre (16) contient le milieu ionique (23), les électrodes (21, 22) étant immergées dans le milieu ionique (23).

4. Agencement d'amortisseur selon la revendication 3, **caractérisé en ce que** le fluide de travail est constitué d'au moins une solution ionique.

5. Agencement d'amortisseur selon la revendication 3, **caractérisé en ce que** le fluide de travail comprend une huile dopée avec une solution ionique.

6. Agencement d'amortisseur selon l'une quelconque des revendications 2 à 5, **caractérisé en ce que** la première électrode (21) comprend une feuille de polymère conducteur d'électricité et la seconde électrode (22) comprend une feuille de matériau conducteur d'électricité comprenant un matériau métallique.

7. Agencement d'amortisseur selon la revendication 6, **caractérisé en ce que** les feuilles sont sensiblement cylindriques et coaxiales avec le manchon (11) et dans lequel, de préférence, la feuille de polymère conducteur d'électricité est située plus près de l'axe (A).

8. Agencement d'amortisseur selon la revendication 1, **caractérisé en ce que** le capteur ionique à PEA (20) forme le manchon (11) et est fixé à la fois à la paroi de base (12) et au piston (14).

9. Agencement d'amortisseur selon la revendication 8, **caractérisé en ce que** le capteur ionique à PEA (20) comprend une couche séparatrice (23) d'un matériau électriquement isolant et ioniquement conducteur, qui forme le milieu ionique, et qui est prise en sandwich entre deux couches d'un polymère conducteur d'électricité qui forment les première et seconde électrodes (21, 22).

10. Agencement d'amortisseur selon l'une quelconque des revendications 1 à 9, **caractérisé en ce qu'**il comprend en outre un ressort (17) logé dans le manchon (11), agencé coaxialement et autour de la tige (13) et en butée contre la paroi de base (12) et le piston (14).

11. Agencement d'amortisseur selon l'une quelconque des revendications 1 à 10, **caractérisé en ce qu'**il comprend en outre un circuit électronique (18) connecté aux électrodes (21, 22), pour fournir un signal électrique représentatif de la position et/ou du mouvement du piston (14) par rapport à la paroi de base (12).

12. Système (55) pour déterminer l'état de surface d'une route, comprenant :
- un agencement d'amortisseur (10) selon la revendication 11, dans lequel le circuit électronique (18) est configuré pour collecter les données de tension induite dans le temps en tant que signal d'entrée (V(t)) et pour traiter le signal d'entrée (V(t)) afin d'obtenir un signal traité (f(t)) représentant un modèle de vibration d'essieu de roue ;
- un ordinateur (5), tel qu'un ordinateur embarqué dans un véhicule, configuré pour analyser le signal traité (f(t)) afin de fournir un ensemble d'indices de l'état de la chaussée (I) de tronçons routiers (RS) successifs, dans lequel un indice (I) correspond à une donnée locale relative à l'état de la chaussée.

13. Véhicule (1),en particulier un véhicule industriel, comprenant un châssis (2) et au moins un axe de roue (3), le véhicule (1) comprenant en outre au moins un agencement d'amortisseur (10) selon l'une quelconque des revendications 1 à 11 pour relier le châssis (2) à l'axe de roue (3), ou comprenant un système (55) de détermination de l'état de surface d'une route selon la revendication 12.

14. Système (50) d'aide à la navigation routière, pour au moins un véhicule (1) selon la revendication 13, le système d'aide à la navigation routière comprenant un système (55) de détermination de l'état de surface d'une route selon la revendication 12, et comprenant en outre une unité d'affichage (7) et un programme de navigation (8) connecté à un système de cartographie (30), dans lequel l'ordinateur (5) est en outre configuré pour :
- combiner le signal traité (f(t)) avec les données du système de cartographie (LD, TD), de manière à attribuer un emplacement à chaque indice (I) ;
- attribuer une représentation graphique spécifique (C) à chaque indice spécifique (I), par exemple une couleur spécifique ;
- et superposer les représentations graphiques (C) correspondant aux tronçons routiers (RS) successifs sur la carte (31) affichée sur l'unité de visualisation (7) par le programme de navigation (8).

15. Système d'aide à la navigation routière selon la revendication 14, comprenant en outre :
- un serveur distant (40) accessible sans fil par les utilisateurs connectés et autorisés, capable de stocker les indices (I) et leurs emplacements respectifs ;
- des moyens de communication entre l'ordinateur (5) et le serveur distant (40).

16. Procédé de détermination de l'état de surface d'une route avec un véhicule (1) selon la revendication 13 circulant sur ladite route, le procédé comprenant :
- la collecte des données de tension induite dans le temps sous la forme d'un signal d'entrée (V(t)) ;
- le traitement du signal d'entrée (V(t)) pour obtenir un signal traité (f(t)) représentant un modèle de vibration d'essieu de roue ;
- l'analyse du signal traité (f(t)) afin de fournir un ensemble d'indices de l'état de la chaussée (I) de tronçons routiers (RS) successifs, dans lequel un indice (I) correspond à une donnée locale relative à l'état de la chaussée.

17. Procédé de détermination de l'état de surface d'une route selon la revendication 16, **caractérisé en ce que** l'analyse du signal traité (f(t)) comprend l'alimentation d'un algorithme d'apprentissage automatique (6) ou d'un algorithme d'apprentissage profond (6) avec le signal traité (f(t)), ledit algorithme (6) étant configuré pour identifier une donnée locale de l'état de la chaussée et attribuer un indice (I) à ladite donnée locale de l'état de la chaussée, sur la base d'une classification préétablie de l'état de la chaussée.

18. Procédé d'aide à la navigation routière, le procédé comprenant :
- la détermination de l'état de surface d'au moins une route à l'aide du procédé selon la revendication 16 ou la revendication 17 ;
- la combinaison du signal traité (f(t)) avec les données (LD, TD) d'un système de cartographie (30) afin d'attribuer un emplacement à chaque indice (I) ;
- l'attribution d'une représentation graphique (C) spécifique à chaque indice (I) spécifique, telle qu'une couleur spécifique ;
- la superposition des représentations graphiques (C) correspondant aux tronçons routiers (RS) successifs sur la carte (31) affichée par un programme de navigation (8).

19. Procédé d'aide à la navigation routière selon la revendication 18, **caractérisé en ce qu'**il comprend en outre le stockage des indices (I) et de leurs emplacements respectifs sur un serveur distant (40) accessible sans fil par des utilisateurs connectés et autorisés.

20. Procédé d'aide à la navigation routière selon la revendication 19, **caractérisé en ce qu'**il comprend la réalisation du procédé de détermination de l'état de surface d'une route selon la revendication 16 ou la revendication 17 pour tous les utilisateurs connectés et autorisés, et **en ce que**, si un indice (I) plus récent est déterminé comme étant différent d'un indice (I) correspondant précédemment stocké d'une valeur prédéterminée, alors ledit indice précédemment stocké est remplacé par l'indice plus récent.
